(19) Europäisches Patentamt

European Patent Office

Office européen des brevets

(11) **EP 4 614 137 A1**

(12) **EUROPEAN PATENT APPLICATION**
published in accordance with Art. 153(4) EPC

(43) Date of publication:
**10.09.2025 Bulletin 2025/37**

(21) Application number: **23885323.8**

(22) Date of filing: **07.08.2023**

(51) International Patent Classification (IPC):
***G01N 23/223*** (2006.01)

(52) Cooperative Patent Classification (CPC):
**G01N 23/223**

(86) International application number:
**PCT/JP2023/028689**

(87) International publication number:
**WO 2024/095551 (10.05.2024 Gazette 2024/19)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **31.10.2022 JP 2022174301**

(71) Applicant: **SHIMADZU CORPORATION
Kyoto-shi, Kyoto 604-8511 (JP)**

(72) Inventors:
• **OGAWA, Rie
Kyoto-shi, Kyoto 604-8511 (JP)**
• **OCHI, Hirotomo
Kyoto-shi, Kyoto 604-8445 (JP)**

(74) Representative: **Müller-Boré & Partner
Patentanwälte PartG mbB
Friedenheimer Brücke 21
80639 München (DE)**

(54) **FLUORESCENT X-RAY ANALYSIS METHOD, ANALYSIS PROGRAM, AND FLUORESCENT X-RAY ANALYSIS DEVICE**

(57) Measured intensities ($M_C$, $M_R$) of Compton scattering and Rayleigh scattering are extracted from a spectrum of a target sample in which a resin-containing thin film is formed on a base material (S21, S22), and a measured scattering intensity ratio ($M_{C/R}$), which is a ratio of the measured intensity of the Rayleigh scattering to the measured intensity of the Compton scattering, is determined (S3). A thickness of the thin film and contents of elements constituting the target sample are determined by a fundamental parameter method based on the measured scattering intensity ratio of the target sample (S5 to S11).

FIG.4

EP 4 614 137 A1

**Description**

TECHNICAL FIELD

The present disclosure relates to X-ray fluorescence spectrometry, an analysis program and an X-ray fluorescence spectrometer.

BACKGROUND ART

The X-ray fluorescence spectrometry is an analysis method of analyzing constituent elements of a sample by irradiating the sample with X-rays and measuring fluorescent X-rays emitted from the sample. As one of the analysis methods by the X-ray fluorescence spectrometry, a fundamental parameter method (hereinafter, referred to as "FP method") is known.

The FP method is a method of determining contents of elements contained in a sample by comparing a theoretical intensity calculated by using various physical constants with a measured intensity obtained by measuring the sample. A method of calculating the theoretical intensity has been established and is disclosed in PTL 1, NPL 1 and the like.

PTL 1 discloses a method of obtaining a quantitative value of a target element by the FP method with consideration given to correction of a sample shape, in light of the fact that a measured intensity of fluorescent X-rays is insufficient depending on the sample shape and the like. In the method disclosed in PTL 1, an amount of adhesion of a thin film is obtained by using the fact that a ratio between a fluorescent X-ray intensity and a scattered X-ray intensity is constant with respect to a certain amount of adhesion even when the shape and the fixation position of the thin film sample change.

NPL 1 discloses a method of quantifying, by the FP method, $CH_2O$ that is a main component of a resin thin film coated on an iron base material. $CH_2O$ that is the main component of the resin thin film is a component that is difficult to measure fluorescent X-rays. Thus, in NPL 1, a quantitative value of $CH_2O$ is estimated by using $RhK\alpha$ Compton scattering. NPL 1 also describes that a measured intensity ratio between $RhK\alpha$ Compton scattering and $FeK\alpha$ is calculated for shape correction.

CITATION LIST

PATENT LITERATURE

PTL 1: Japanese Patent Laying-Open No. 2003-107020

NON PATENT LITERATURE

NPL 1: "Advances in X-ray chemical analysis", AGNE Gijutsu Center Inc., 40 (2009), p233-p241

SUMMARY OF INVENTION

TECHNICAL PROBLEM

As disclosed in NPL 1, a method of quantitatively analyzing a main component of a resin thin film coated on a base material with the use of scattered X-rays is known. In this method, the influence of a sample shape on a quantitative value can be made smaller than in a method in which the main component of the resin thin film is regarded as a balance.

However, the method disclosed in NPL 1 is based on the premise that fluorescent X-rays derived from a main component of the base material can pass through the thin film because the fluorescent X-rays derived from the main component of the base material are used for shape correction. Therefore, the method disclosed in NPL 1 is not applicable to a sample including a base material such as aluminum that is low in transmittance of the fluorescent X-rays.

In addition, in the method disclosed in NPL 1, the quantitative value of the main component of the resin thin film is determined by using proportionality between a measured intensity and a theoretical intensity of scattered X-rays. An X-ray fluorescence spectrometer is configured to place a sample to cover an opening formed in a sample stage, and emit X-rays from the sample placement surface side through the opening. The X-ray fluorescence spectrometer detects the X-rays having passed through the opening, of the X-rays returned from the sample. However, the X-ray fluorescence spectrometer cannot detect the scattered X-rays having penetrated deeply into the sample, because these X-rays hit the sample stage and cannot pass through the opening.

When bulk resin, which is a resin sample having a sufficient thickness, is used as a standard sample, scattered X-rays having penetrated deeply into the sample cannot be detected. When the bulk resin is used as a standard sample, a part of the scattered X-rays cannot be detected, and thus, the proportionality between the measured intensity and the theoretical intensity of the scattered X-rays is no longer satisfied. Therefore, in the method disclosed in NPL 1, the bulk resin cannot be used as a standard sample.

The present disclosure has been made to solve the above-described problem, and an object of the present disclosure is to provide a method of analyzing, by the FP method, a target sample in which a resin-containing thin film is formed on a base material, and to make the range of application of analysis wider.

SOLUTION TO PROBLEM

X-ray fluorescence spectrometry according to the present disclosure is X-ray fluorescence spectrometry of analyzing secondary X-rays obtained by irradiating a sample with primary X-rays from an X-ray source having a rhodium target. The X-ray fluorescence spectrometry includes: extracting a measured intensity of rhodium-derived Compton scattering from a spectrum of a target sample in which a resin-containing thin film is formed on a base material, the spectrum being created based on the secondary X-rays obtained by irradiating the target sample with the primary X-rays; extracting a measured intensity of rhodium-derived Rayleigh scattering from the spectrum of the target sample; determining a measured scattering intensity ratio based on the measured intensities extracted from the spectrum of the target sample, the measured scattering intensity ratio being a ratio of the measured intensity of the Rayleigh scattering to the measured intensity of the Compton scattering; and determining a thickness of the thin film and contents of elements constituting the target sample by a fundamental parameter method based on the measured scattering intensity ratio of the target sample. A theoretical intensity of the Compton scattering is determined based on a first computing equation including, as variables, the thickness of the thin film and the contents of the elements constituting the target sample. A theoretical intensity of the Rayleigh scattering is determined based on a second computing equation including, as variables, the thickness of the thin film and the contents of the elements constituting the target sample. The determining the thickness of the thin film and the contents includes: determining an estimated scattering intensity ratio from a theoretical scattering intensity ratio by substituting estimated values into the variables included in the first computing equation and the second computing equation, the theoretical scattering intensity ratio being a ratio of the theoretical intensity of the Rayleigh scattering to the theoretical intensity of the Compton scattering; and updating the estimated values such that the estimated scattering intensity ratio converges to the measured scattering intensity ratio.

An analysis program according to the present disclosure is an analysis program for analyzing secondary X-rays obtained by irradiating a sample with primary X-rays from an X-ray source having a rhodium target. The analysis program causes a computer to perform: extracting a measured intensity of rhodium-derived Compton scattering from a spectrum of a target sample in which a resin-containing thin film is formed on a base material, the spectrum being created based on the secondary X-rays obtained by irradiating the target sample with the primary X-rays; extracting a measured intensity of rhodium-derived Rayleigh scattering from the spectrum of the target sample; determining a measured scattering intensity ratio based on the measured intensities extracted from the spectrum of the target sample, the measured scattering intensity ratio being a ratio of the measured intensity of the Rayleigh scattering to the measured intensity of the Compton scattering; and determining a thickness of the thin film and contents of elements constituting the target sample by a fundamental parameter method based on the measured scattering intensity ratio of the target sample. A theoretical intensity of the Compton scattering is determined based on a first computing equation including, as variables, the thickness of the thin film and the contents of the elements constituting the target sample. A theoretical intensity of the Rayleigh scattering is determined based on a second computing equation including, as variables, the thickness of the thin film and the contents of the elements constituting the target sample. The determining the thickness of the thin film and the contents includes: determining an estimated scattering intensity ratio from a theoretical scattering intensity ratio by substituting estimated values into the variables included in the first computing equation and the second computing equation, the theoretical scattering intensity ratio being a ratio of the theoretical intensity of the Rayleigh scattering to the theoretical intensity of the Compton scattering; and updating the estimated values such that the estimated scattering intensity ratio converges to the measured scattering intensity ratio.

An X-ray fluorescence spectrometer according to the present disclosure includes: a sample stage on which a sample is placed; an X-ray tube configured to emit, toward the sample stage, primary X-rays from an X-ray source having a rhodium target; a detector that detects secondary X-rays from the sample placed on the sample stage; and a control device that analyzes the secondary X-rays detected by the detector. The sample is a target sample in which a resin-containing thin film is formed on a base material. A theoretical intensity of rhodium-derived Compton scattering included in the secondary X-rays from the target sample is determined based on a first computing equation including, as variables, a thickness of the thin film and contents of elements constituting the target sample. A theoretical intensity of rhodium-derived Rayleigh scattering included in the secondary X-rays from the target sample is determined based on a second computing equation including, as variables, the thickness of the thin film and the contents of the elements constituting the target sample. The control device is configured to create an X-ray spectrum of the target sample based on the secondary X-rays, extract a measured intensity of the Compton scattering and a measured intensity of the Rayleigh scattering from the created X-ray spectrum, determine a measured scattering intensity ratio based on the extracted measured intensities, the measured scattering intensity ratio being a ratio of the measured intensity of the Rayleigh scattering to the measured intensity of the Compton scattering, and determine the thickness of the thin film and the contents of the elements constituting the target sample by a fundamental parameter method based on the measured scattering intensity ratio of the target sample. The thickness of the thin film and the contents of the elements constituting the target sample are determined by: determining an estimated scattering intensity ratio from a theoretical scattering intensity ratio by substituting estimated values into the variables included in the first computing equation and the second computing equation, the theoretical scattering intensity ratio being a ratio of the theoretical intensity of the Rayleigh scattering to the theoretical intensity of the Compton scattering; and updating the estimated values such that the estimated scattering intensity ratio converges to the measured scattering intensity ratio.

ADVANTAGEOUS EFFECTS OF INVENTION

According to the present disclosure, the range of application when analyzing, by the FP method, the target sample in which the resin-containing thin film is formed on the base material can be made wider.

BRIEF DESCRIPTION OF DRAWINGS

Fig. 1 is a diagram schematically illustrating an overall configuration of an X-ray fluorescence spectrometer.
Fig. 2 is a functional block diagram of a detector and a control device.
Fig. 3 is a diagram illustrating an example of an X-ray spectrum stored in a spectrum storage unit.
Fig. 4 is a flowchart illustrating an analysis method.
Fig. 5 is a flowchart illustrating a method of determining sensitivity coefficient ratios.

DESCRIPTION OF EMBODIMENTS

[Overall Configuration of X-Ray Fluorescence Spectrometer]

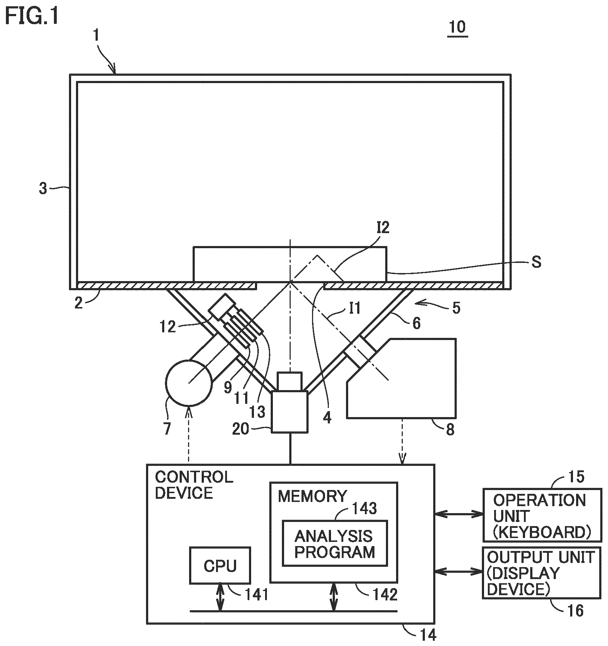

Fig. 1 is a diagram schematically illustrating an overall configuration of an X-ray fluorescence spectrometer. An X-ray fluorescence spectrometer 10 illustrated in Fig. 1 includes a sample chamber 1, a measurement chamber 5, a control device 14, an operation unit 15, and an output unit 16.
X-ray fluorescence spectrometer 10 is an energy dispersive type X-ray fluorescence spectrometer (EDX) that measures a concentration of an element contained in a sample S. Sample chamber 1 and a space inside measurement chamber 5 are airtightly enclosed by a housing 3, and an inside thereof can be kept in a vacuum state as necessary.
Sample chamber 1 includes a sample stage 2 at a bottom part. Sample stage 2 has a circular opening 4. Sample S is placed on sample stage 2 such that a measurement position on a surface of sample S is exposed from opening 4 at the bottom part of housing 3.
On a wall surface 6 of measurement chamber 5, there are provided an X-ray tube 7 and a detector 8. X-ray tube 7 emits primary X-rays toward sample S. The primary X-rays emitted from X-ray tube 7 are applied to the measurement position of sample S through opening 4. Secondary X-rays obtained by irradiating sample S with the primary X-rays are incident on detector 8, and energy and intensity of the secondary X-rays are measured.
In measurement chamber 5, there are installed a shutter 9, a primary X-ray filter 11, and a collimator 13. Shutter 9, primary X-ray filter 11, and collimator 13 are configured to be slidable in a direction perpendicular to a paper surface of Fig. 1 by a drive mechanism 12.
Shutter 9 is formed of an X-ray absorbing material such as lead, and can be inserted into an optical path of the primary X-rays to block the primary X-rays when necessary.
Primary X-ray filter 11 is formed of a metal foil selected in accordance with a purpose and attenuates a background component of the primary X-rays emitted from X-ray tube 7 to improve S/N ratios of required characteristic X-rays. In an actual device, a plurality of primary X-ray filters 11 made of mutually different kinds of metals are used, and primary X-ray filters 11 selected in accordance with a purpose are inserted into the optical path of the primary X-rays by drive mechanism 12.
Collimator 13 is an aperture having a circular opening in a center thereof, and determines a beam size of the primary X-rays with which sample S is irradiated. Collimator 13 is formed of an X-ray absorbing material such as brass. In an actual device, a plurality of collimators 13 having different opening diameters are arranged side by side in a direction perpendicular to the paper surface of Fig. 1, and collimator 13 selected in accordance with a purpose is inserted on a primary X-ray beam line by drive mechanism 12.

An image pickup unit 20 is disposed at a lower part of measurement chamber 5 to observe the measurement position of sample S before or during measurement. That is, image pickup unit 20 is arranged to face the surface of sample S and is configured to pick up an image of the measurement position of sample S through opening 4 formed in sample stage 2.

Before measurement, a user that performs X-ray fluorescence spectrometry causes output unit 16 to display the image acquired by image pickup unit 20, and adjusts the measurement position of sample S while looking at this image. In addition, for management of a measurement result of fluorescent X-rays, image data of the measurement position is stored and managed in association with the measurement result, with the image data serving as an identifier.

Control device 14 is configured mainly with a central processing unit (CPU) 141 that is an arithmetic processing unit. As control device 14, a personal computer can be used, for example. X-ray tube 7, detector 8, operation unit 15, and output unit 16 are connected to control device 14.

Control device 14 controls measurement performed by X-ray fluorescence spectrometer 10 on the basis of a measurement condition that is input by operation unit 15 including a keyboard, a mouse, and the like. Specifically, control device 14 controls a tube voltage, a tube current, an irradiation time, and the like in X-ray tube 7. Note that operation unit 15 may be a touch panel or the like integrally configured with a display screen of a display device.

Control device 14 acquires data of the secondary X-rays detected by detector 8. Control device 14 performs an analysis of sample S on the basis of a spectrum of the secondary X-rays detected by detector 8.

Output unit 16 includes a display device including, for example, a liquid crystal display (LCD) or an organic electro luminescence (EL). The display device displays an image based on the data transmitted from control device 14. The display device can display various images created by control device 14. The display device can also display an analysis result created by control device 14, together with identification information (product name, product number, measurement position, and the like) for identifying sample S.

Control device 14 includes CPU 141 and a memory 142 that stores various programs including an analysis program 143 and data. Memory 142 includes a read only memory (ROM), a random access memory (RAM), and a solid state drive (SSD). Instead of the SSD, a hard disk drive (HDD) may be included.

The ROM stores various programs including analysis program 143 to be executed by CPU 141, and various parameters. The RAM temporarily stores data used during execution of various programs on CPU 141, and functions as a temporary data memory used as a work area. The SSD is a nonvolatile storage device, and stores a measurement result by X-ray fluorescence spectrometer 10.

Analysis program 143 is a program for performing an analysis of sample S on the basis of the spectrum of the secondary X-rays detected by detector 8. CPU 141 reads and executes analysis program 143, thereby implementing each processing (step) related to a below-described analysis method.

Analysis program 143 can also be provided as a program product by recording analysis program 143 on a non-transitory computer-readable recording medium such as a flexible disk, a compact disk read only memory (CD-ROM), a secondary storage device, a main storage device, or a memory card attached to a computer. Alternatively, analysis program 143 can also be provided by recording analysis program 143 on a recording medium such as a hard disk included in a computer. Further, analysis program 143 can also be provided by downloading analysis program 143 via a network.

[Functional Configuration of Control Device]

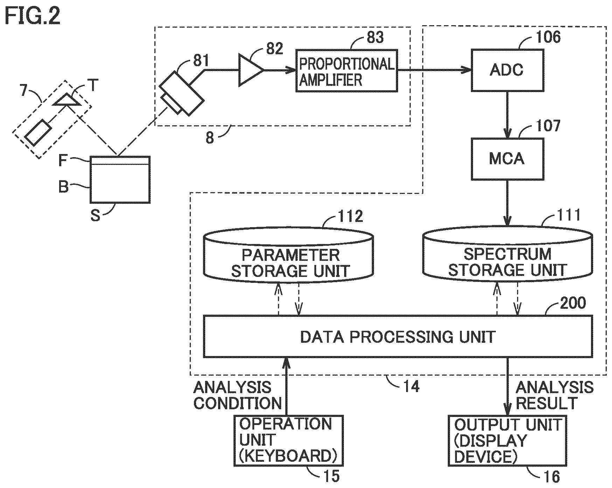

Fig. 2 is a functional block diagram of the detector and the control device. By executing various programs, CPU 141 performs an operation of each functional block of control device 14 in Fig. 2.

Detector 8 includes an X-ray detector 81, a pre-amplifier 82, and a proportional amplifier 83. Control device 14 includes an A/D converter (ADC) 106, a multichannel analyzer (MCA) 107, a spectrum storage unit 111, a parameter storage unit 112, and a data processing unit 200. Although not illustrated, control device 14 includes a control unit for controlling the devices that form X-ray fluorescence spectrometer 10.

X-ray tube 7 includes: a filament that emits thermal electrons; and a target T that converts the thermal electrons into predetermined primary X-rays and emits the primary X-rays. Target T is rhodium (Rh). Therefore, X-ray tube 7 is configured to emit, toward sample stage 2, the primary X-rays from an X-ray source having a rhodium target.

When the primary X-rays emitted from X-ray tube 7 are applied to sample S, the secondary X-rays excited by the primary X-rays are emitted from sample S and are incident on X-ray detector 81 such as a silicon drift detector, and the incident secondary X-rays are detected as a current signal.

The detected current is integrated inside X-ray detector 81, and a value of the integral is reset when a certain time has elapsed. As a result, an output signal of X-ray detector 81 becomes a step-shaped current pulse signal. The current pulse signal is input to pre-amplifier 82 and proportional amplifier 83 including a waveform shaping circuit and is formed into a pulse having an appropriate shape having a wave height corresponding to the height of each step before being output.

A/D converter (ADC) 106 samples and digitizes the analog signal having a pulse waveform, at a predetermined sampling period. Multichannel analyzer (MCA) 107 discriminates the pulses into various energy ranges on the basis of peak height values of the digitized pulse signal, then counts the discriminated pulses, and creates a wave height distribution diagram, in other words, an X-ray spectrum, then stores the X-ray spectrum in spectrum storage unit 111.

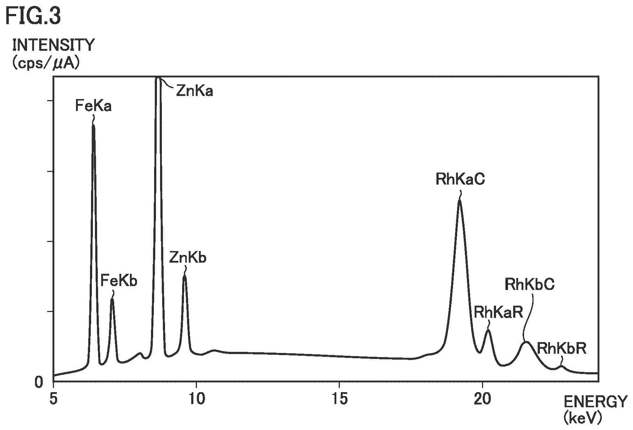

Fig. 3 is a diagram illustrating an example of the X-ray spectrum stored in spectrum storage unit 111. As illustrated in Fig. 3, the secondary X-rays include fluorescent X-rays (FeK$\alpha$, ZnK$\alpha$ and the like in the figure) specific to the elements contained in sample S, and Rayleigh scattering (RhK$\alpha$R in the figure) and Compton scattering (RhK$\alpha$C in the figure) having bounced back from sample S.

Data processing unit 200 analyzes the X-ray spectrum stored in spectrum storage unit 111 based on an analysis condition input from operation unit 15 and various parameters such as a physical constant (fundamental parameter) stored in parameter storage unit 112, and outputs an analysis result to output unit 16.

In the present embodiment, data processing unit 200 analyzes the X-ray spectrum obtained from sample S by the FP method. A specific analysis method will be described below.

[Analysis Method]

The method of analyzing the X-ray spectrum by data processing unit 200 will be described. As an example, as illustrated in Fig. 2, X-ray fluorescence spectrometer 10 according to the present embodiment uses, as a sample to be analyzed, sample S in which a thin film F is formed on a base material B.

When an element in a thin film is quantified, a fluorescent X-ray intensity obtained from the thin film is lower than a fluorescent X-ray intensity obtained from a bulk having a sufficient thickness. Therefore, when the element in the thin film is quantified by X-ray fluorescence spectrometry, it is necessary to take a film thickness into consideration.

Data processing unit 200 according to the present embodiment determines, as analysis results, a composition of sample S and a film thickness t that is a thickness of thin film F by the FP method.

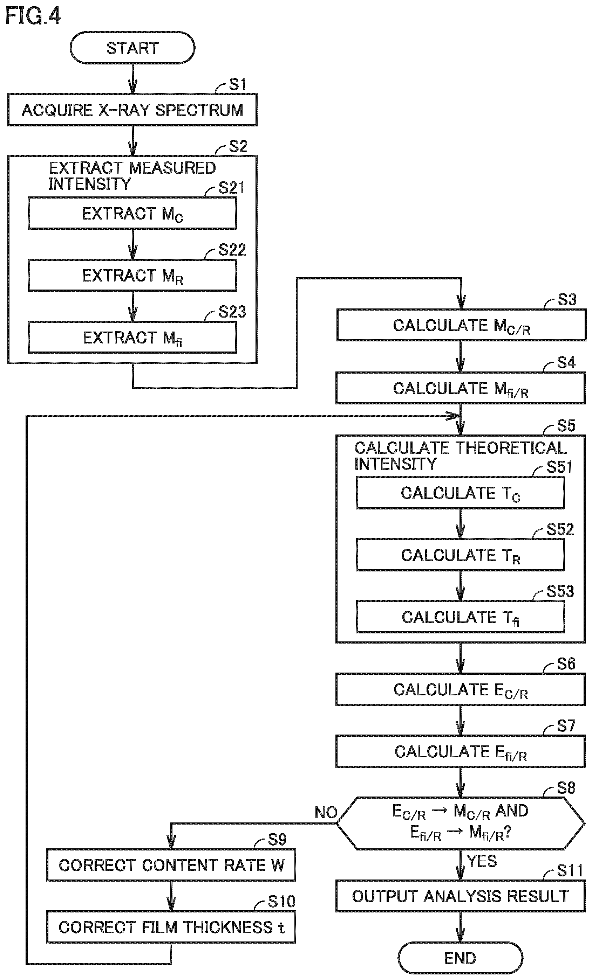

Fig. 4 is a flowchart illustrating the analysis method. Each processing (step) illustrated in Fig. 4 is processing performed by control device 14 and is implemented by CPU 141 executing various programs including analysis program 143.

In step S1, control device 14 acquires an X-ray spectrum by emitting primary X-rays from X-ray tube 7 toward sample S and causing detector 8 to detect secondary X-rays from sample S. The acquired X-ray spectrum is stored in spectrum storage unit 111.

In step S2, control device 14 extracts an intensity of each spectral line that appears in the acquired X-ray spectrum. Control device 14 determines a spectral line to be extracted, based on the analysis condition input from operation unit 15, for example. As the analysis condition, a substance constituting base material B and a substance constituting thin film F are input from operation unit 15. Note that "substance" contains at least one of a compound and an element.

In step S2, processing in steps S21 to S23 is performed.

In step S21, control device 14 extracts a measured intensity $M_C$, which is an intensity of Compton scattering.

In step S22, control device 14 extracts a measured intensity $M_R$, which is an intensity of Rayleigh scattering.

In step S23, control device 14 extracts a measured intensity $M_{fi}$, which is an intensity of fluorescent X-rays derived from an element i, for each inorganic element constituting sample S.

In step S3, control device 14 determines a measured scattering intensity ratio $M_{C/R}$ from the measured intensities extracted in step S2. Measured scattering intensity ratio $M_{C/R}$ is a ratio of measured intensity $M_R$ of the Rayleigh scattering to measured intensity $M_C$ of the Compton scattering and is calculated based on Equation (1).

[Math. 1]

$$M_{C/R} = \frac{M_C}{M_R} \ \cdots \ (1)$$

In step S4, control device 14 determines, for each inorganic element constituting sample S, a measured fluorescent X-ray intensity ratio $M_{fi/R}$ of the fluorescent X-rays derived from element i from the measured intensities extracted in step S2. Measured fluorescent X-ray intensity ratio $M_{fi/R}$ is a ratio of measured intensity $M_R$ of the Rayleigh scattering to measured intensity $M_{fi}$ of the fluorescent X-rays derived from element i and is calculated based on Equation (2).

[Math. 2]

$$M_{fi/R} = \frac{M_{fi}}{M_R} \ \cdots \ (2)$$

In step S5, control device 14 calculates a theoretical intensity of each spectral line. In step S5, processing in steps S51 to S53 is performed.

In step S51, control device 14 calculates a theoretical intensity $T_C$ of the Compton scattering based on Equation (3) below.
[Math. 3]

$$T_C = f_C(t, W_{i1}, W_{i2}, \cdots) \ \ldots \ (3)$$

W represents a content rate of an element. Subscripts i1, i2, ... represent element types and correspond to the number of types of all elements constituting sample S. t represents a film thickness of thin film F. The elements constituting sample S are specified from the substance constituting base material B and the substance constituting thin film F, which are input from operation unit 15 as the analysis condition. Note that content rate W is a variable corresponding to "content" because the content can be determined by multiplying the content rate by a weight of sample S.

As shown in Equation (3), theoretical intensity $T_C$ of the Compton scattering is expressed by a theoretical formula including, as variables, content rates $W_{i1}$, $W_{i2}$, ... of the elements constituting sample S and film thickness t of thin film F. Equation (3) includes various parameters and control device 14 calculates theoretical intensity $T_C$ by substituting, into Equation (3), various parameters stored in parameter storage unit 112 and initial values of the variables input from operation unit 15 as the analysis condition or estimated values corrected in steps S9 and S10. Note that the initial values may be directly input from operation unit 15, or may be determined by control device 14 based on the elements constituting sample S. When control device 14 determines the initial values based on the elements constituting sample S and when sample S is composed of five types of elements, control device 14 sets the initial value of each element to 20% as an example. The estimated values corrected in steps S9 and S10 will be described below and will also be simply referred to as "estimated values after correction" hereinafter.

In step S52, control device 14 calculates a theoretical intensity $T_R$ of the Rayleigh scattering based on Equation (4) below.
[Math. 4]

$$T_R = f_R(t, W_{i1}, W_{i2}, \cdots) \ \ldots \ (4)$$

As shown in Equation (4), theoretical intensity $T_R$ of the Rayleigh scattering is expressed by a theoretical formula including, as variables, the content rates of the elements constituting sample S and film thickness t of thin film F, similarly to theoretical intensity $T_C$ of the Compton scattering. Control device 14 calculates theoretical intensity $T_R$ of the Rayleigh scattering by substituting, into Equation (4), various parameters stored in parameter storage unit 112 and the initial values of the variables input from operation unit 15 as the analysis condition or the estimated values after correction.

In step S53, control device 14 calculates a theoretical intensity $T_{fi}$ of the fluorescent X-rays derived from element i for each inorganic element constituting sample S based on Equation (5) below.
[Math. 5]

$$T_{fi} = f_{fi}(t, W_i) \ \ldots \ (5)$$

$T_{fi}$ represents the theoretical intensity of the fluorescent X-rays derived from element i. As shown in Equation (5), theoretical intensity $T_{fi}$ of the fluorescent X-rays derived from element i is expressed by a theoretical formula including, as variables, film thickness t and the content rate of element i. Control device 14 calculates theoretical intensity $T_{fi}$ of the fluorescent X-rays derived from element i by substituting, into Equation (5), various parameters stored in parameter storage unit 112 and the initial values of the variables input from operation unit 15 as the analysis condition or the estimated values after correction.

Since a mechanism of generating the Compton scattering, a mechanism of generating the Rayleigh scattering, and a mechanism of generating the fluorescent X-rays derived from each element are different from each other, Equations (3) to (5) are different from each other. In addition, each of the theoretical formulas of Equations (3) to (5) is determined based on a mechanism of generating the spectral line, and is known. Therefore, description of the details of Equations (3) to (5) will not be provided.

In step S6, control device 14 calculates an estimated scattering intensity ratio $E_{C/R}$ based on Equation (6) below.
[Math. 6]

$$E_{C/R} = k_{C/R} \frac{T_C}{T_R} \ \ldots \ (6)$$

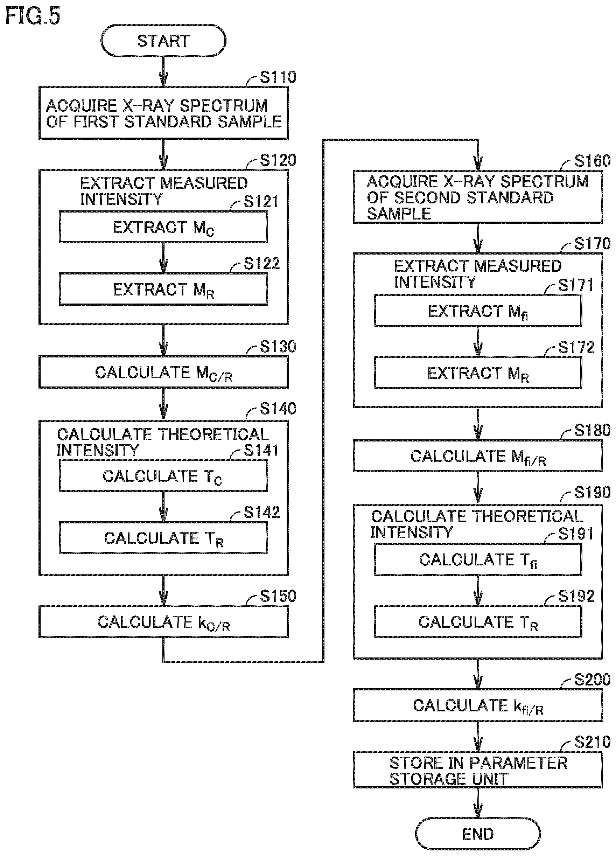

$k_{C/R}$ represents a sensitivity coefficient ratio and is a ratio of a sensitivity coefficient $k_R$ of the Rayleigh scattering to a sensitivity coefficient $k_C$ of the Compton scattering. Sensitivity coefficient ratio $k_{C/R}$ is obtained by measuring a standard sample having a known composition ratio and is stored in parameter storage unit 112. A specific method of calculating sensitivity coefficient ratio $k_{C/R}$ will be described below with reference to Fig. 5.

In step S7, control device 14 calculates an estimated fluorescent X-ray intensity ratio $E_{fi/R}$ about element i for each inorganic element constituting sample S based on Equation (7) below.

[Math. 7]

$$E_{fi/R} = k_{fi/R} \frac{T_{fi}}{T_R} \ ... \ (7)$$

$k_{fi/R}$ represents a sensitivity coefficient ratio of the fluorescent X-rays derived from element i and is a ratio of sensitivity coefficient $k_R$ of the Rayleigh scattering to a sensitivity coefficient $k_{fi}$ of the fluorescent X-rays derived from element i. Sensitivity coefficient ratio $k_{fi/R}$ is obtained by measuring a standard sample containing element i and containing known content rates of elements, and is stored in parameter storage unit 112. A specific method of calculating sensitivity coefficient ratio $k_{fi/R}$ will be described below with reference to Fig. 5.

In step S8, control device 14 determines whether estimated scattering intensity ratio $E_{C/R}$ has converged to measured scattering intensity ratio $M_{C/R}$ and estimated fluorescent X-ray intensity ratio $E_{fi/R}$ has converged to measured fluorescent X-ray intensity ratio $M_{fi/R}$. For example, when a difference between estimated scattering intensity ratio $E_{C/R}$ and measured scattering intensity ratio $M_{C/R}$ is smaller than a predetermined first threshold value and a difference between estimated fluorescent X-ray intensity ratio $E_{fi/R}$ and measured fluorescent X-ray intensity ratio $M_{fi/R}$ is smaller than a predetermined second threshold value, control device 14 determines that the convergence has been achieved. The first threshold value and the second threshold value may be predetermined and may be determined based on, for example, the required accuracy.

A method of determining the convergence is not limited to the above-described method. For example, when a difference between the estimated values before correction and the estimated values after correction is smaller than a predetermined third threshold value, control device 14 may determine that the convergence has been achieved.

When control device 14 determines that the convergence has not been achieved (NO in step S8), control device 14 performs processing in steps S9 and S10, and then, performs processing in step S5 and the subsequent steps again.

In step S9, control device 14 corrects content rates $W_{i1}$, $W_{i2}$, ... of the elements such that the estimated intensity ratio converges to the measured intensity ratio.

In step S10, control device 14 corrects film thickness t such that a total value of corrected content rates $W_{i1}$, $W_{i2}$, ... approaches 100%.

In steps S5 to S7, control device 14 determines theoretical intensities $T_C$, $T_R$ and $T_{fi}$ by substituting content rates $W_{i1}$, $W_{i2}$, ... of the elements and film thickness t corrected in steps S9 and S10 into Equations (3) to (5) above, and determines estimated scattering intensity ratio $E_{C/R}$ and estimated fluorescent X-ray intensity ratio $E_{fi/R}$.

Control device 14 repeats processing in steps S9, S10 and S5 to S7 until the convergence is achieved.

When control device 14 determines that the convergence has been achieved (YES in step S8), control device 14 outputs an analysis result to output unit 16 in step S11. More specifically, control device 14 outputs, as the content rates of the elements constituting sample S and film thickness t of thin film F, content rates $W_{i1}$, $W_{i2}$, ... of the elements and film thickness t in estimated scattering intensity ratio $E_{C/R}$ and estimated fluorescent X-ray intensity ratio $E_{fi/R}$ when the convergence has been achieved.

In the above-described embodiment, the elements constituting sample S are specified by being input from operation unit 15. However, the elements constituting sample S may be specified by qualitative analysis of the obtained spectrum.

[Method of Determining Sensitivity Coefficient Ratio]

Fig. 5 is a flowchart illustrating a method of determining the sensitivity coefficient ratios. Sensitivity coefficient ratio $k_{C/R}$ is determined from an X-ray spectrum of a standard sample containing known content rates of elements. Sensitivity coefficient ratio $k_{fi/R}$ is determined from an X-ray spectrum of a standard sample containing an inorganic element contained in a sample to be analyzed and containing known content rates of elements. Each processing (step) illustrated in Fig. 5 is processing performed by control device 14 and is implemented by CPU 141 executing various programs including analysis program 143. In the following description, sensitivity coefficient ratio $k_{C/R}$, a sensitivity coefficient ratio $k_{fPb/R}$ of lead, and a sensitivity coefficient ratio $k_{fFe/R}$ of iron are determined as an example.

Each of the sensitivity coefficient ratios can be determined from the X-ray spectrum of the standard sample. The standard sample is such a substance that constituent elements thereof are known and content rates of the constituent elements are known. In the following example, sensitivity coefficient ratio $k_{C/R}$ is determined from an X-ray spectrum of a first standard sample, and sensitivity coefficient ratio $k_{fPb/R}$ of lead and sensitivity coefficient ratio $k_{fFe/R}$ of iron are determined from an X-ray spectrum of a second standard sample. The first standard sample is bulk resin, which is a bulk of resin containing known content rates of elements. The second standard sample is bulk metal containing lead and iron and containing known content rates of elements. Note that each of the bulk resin and the bulk metal may have a thickness that eliminates the need to take the film thickness into consideration in the FP method.

First, by performing steps S110 to S150, control device 14 determines sensitivity coefficient ratio $k_{C/R}$ from the X-ray spectrum of the first standard sample. In step S110, control device 14 acquires the X-ray spectrum of the first standard sample.

In step S120, control device 14 extracts a measured intensity of each spectral line. In step S120, processing in steps S121 and S122 is performed.

In step S121, control device 14 extracts measured intensity $M_C$, which is the intensity of the Compton scattering. More specifically, control device 14 extracts measured intensity $M_C$ of the Compton scattering from the X-ray spectrum of the first standard sample.

In step S122, control device 14 extracts measured intensity $M_R$, which is the intensity of the Rayleigh scattering. More specifically, control device 14 extracts measured intensity $M_R$ of the Rayleigh scattering from the X-ray spectrum of the first standard sample.

In step S130, control device 14 determines measured scattering intensity ratio $M_{C/R}$ from measured intensity $M_C$ and measured intensity $M_R$ extracted in steps S121 and S122, based on Equation (1) above.

In step S140, control device 14 calculates a theoretical intensity of each spectral line. In step S140, processing in steps S141 and S142 is performed.

In step S141, control device 14 calculates theoretical intensity $T_C$ of the Compton scattering about the first standard sample based on Equation (3) above. Theoretical intensity $T_C$ is calculated, assuming that film thickness t is infinite or an appropriate and sufficiently large value. When the standard sample is a thin film, control device 14 substitutes a film thickness of the thin film into Equation (3).

In step S142, control device 14 calculates theoretical intensity $T_R$ of the Rayleigh scattering about the first standard sample based on Equation (4) above. Similarly to step S141, it is assumed that film thickness t is infinite or an appropriate and sufficiently large value. When the standard sample is a thin film, control device 14 substitutes a film thickness of the thin film into Equation (4).

In step S150, control device 14 calculates sensitivity coefficient ratio $k_{C/R}$ by substituting, into Equation (8) below, measured scattering intensity ratio $M_{C/R}$, theoretical intensity $T_C$ of the Compton scattering, and theoretical intensity $T_R$ of the Rayleigh scattering calculated in steps S130 and S140.

[Math. 8]

$$k_{C/R} = \frac{M_{C/R}}{T_C/T_R} \quad \cdots (8)$$

Next, by performing steps S160 to S200, control device 14 determines sensitivity coefficient ratio $k_{fPb/R}$ of lead and sensitivity coefficient ratio $k_{fFe/R}$ of iron from the X-ray spectrum of the second standard sample. In step S160, control device 14 acquires the X-ray spectrum of the second standard sample.

In step S170, control device 14 extracts a measured intensity of each spectral line. In step S170, processing in steps S171 and S172 is performed.

In step S171, control device 14 extracts measured intensity $M_{fi}$, which is the intensity of fluorescent X-rays derived from each inorganic element. More specifically, control device 14 extracts a measured intensity $M_{fPb}$ of fluorescent X-rays derived from lead and a measured intensity $M_{fFe}$ of fluorescent X-rays derived from iron from the X-ray spectrum of the second standard sample.

In step S172, control device 14 extracts measured intensity $M_R$, which is the intensity of the Rayleigh scattering. More specifically, control device 14 extracts measured intensity $M_R$ of the Rayleigh scattering from the X-ray spectrum of the second standard sample.

In step S180, control device 14 determines measured fluorescent X-ray intensity ratio $M_{fi/R}$ from measured intensity $M_{fi}$ of the fluorescent X-rays derived from element i and measured intensity $M_R$ of the Rayleigh scattering extracted in steps S171 and S172, based on Equation (2) above. More specifically, control device 14 determines a measured fluorescent X-ray intensity ratio $M_{fPb/R}$ of lead and a measured fluorescent X-ray intensity ratio $M_{fFe/R}$ of iron.

In step S190, control device 14 calculates a theoretical intensity of each spectral line. In step S190, processing in steps S191 and S192 is performed.

In step S191, control device 14 calculates theoretical intensity $T_{fi}$ of the fluorescent X-rays derived from each inorganic element based on Equation (5) above. More specifically, in the present embodiment, control device 14 calculates a theoretical intensity $T_{fPb}$ of the fluorescent X-rays derived from lead and a theoretical intensity $T_{fFe}$ of the fluorescent X-rays derived from iron about the second standard sample. Similarly to step S141, it is assumed that film thickness t is infinite or an appropriate and sufficiently large value. When the standard sample is a thin film, control device 14 substitutes a film thickness of the thin film into Equation (5).

In step S192, control device 14 calculates theoretical intensity $T_R$ of the Rayleigh scattering about the second standard sample based on Equation (4) above. Similarly to step S141, it is assumed that film thickness t is infinite or an appropriate and sufficiently large value. When the standard sample is a thin film, control device 14 substitutes a film thickness of the thin film into Equation (4).

In step S200, control device 14 calculates sensitivity coefficient ratio $k_{fi/R}$ of the fluorescent X-rays by substituting, into Equation (9) below, measured fluorescent X-ray intensity ratio $M_{fi/R}$, theoretical intensity $T_{fi}$ of the fluorescent X-rays, and theoretical intensity $T_R$ of the Rayleigh scattering calculated in steps S180 and S190. More specifically, sensitivity coefficient ratio $k_{fPb/R}$ of lead is determined by substituting measured fluorescent X-ray intensity ratio $M_{fPb/R}$ of lead, theoretical intensity $T_{fPb}$ of lead, and theoretical intensity $T_R$ of the Rayleigh scattering into Equation (9). Sensitivity coefficient ratio $k_{fFe/R}$ of iron is determined by substituting measured fluorescent X-ray intensity ratio $M_{fFe/R}$ of iron, theoretical intensity $T_{fFe}$ of iron, and theoretical intensity $T_R$ of the Rayleigh scattering into Equation (9).
[Math. 9]

$$k_{fi/R} = \frac{M_{fi/R}}{T_{fi}/T_R} \quad \dots (9)$$

In step S210, control device 14 stores the sensitivity coefficient ratios calculated in steps S150 and S200 in parameter storage unit 112 and ends the process.

In Fig. 5, the bulk resin is used as the first standard sample and control device 14 determines sensitivity coefficient ratio $k_{C/R}$ from the X-ray spectrum of the first standard sample. Control device 14 may determine sensitivity coefficient ratio $k_{C/R}$ from the X-ray spectrum of the second standard sample, which is the bulk metal. Although the sensitivity coefficient ratio is preferably determined by using a standard sample composed of components close to those of a target sample to be measured, the sensitivity coefficient ratio may be determined by using a standard sample composed of components different from those of a target sample.

[Example and Comparative Examples]

A degree of precision of the analysis values obtained by the analysis method according to the present embodiment was checked. Sample S is a Paper clip coated with resin. Iron (Fe) is used as a base material and polyethylene ($C_2H_4$) is used as the resin. Analysis results obtained by performing quantitative analysis of lead (Pb) in the resin coating of sample S in accordance with the analysis method according to the present embodiment and a calibration curve method, and analysis conditions thereof are shown in Table 1.

[Table 1]

| | Analysis condition | | Analysis result | |
|---|---|---|---|---|
| | Analysis method | Sample destruction | Film thickness [μm] | Content rate of lead [%] |
| Example | FP method | not occur | 416 | 0.665 |
| Comparative Example 1 | calibration curve method | | - | 0.563 |
| Comparative Example 2 | | occur | - | 0.676 |

In Example, quantitative analysis of lead in the resin coating of sample S was performed in accordance with the analysis method according to the present embodiment. In Example, an X-ray spectrum obtained by placing sample S on sample stage 2 without destructing sample S was analyzed in accordance with the analysis method illustrated in Fig. 4. Sensitivity coefficient ratios were determined in accordance with the method illustrated in Fig. 5 by using bulk polyethylene, iron and lead as standard samples.

In Comparative Example 1, an X-ray spectrum obtained by placing sample S on sample stage 2 without destructing sample S was analyzed in accordance with the calibration curve method. In Comparative Example 2, an X-ray spectrum obtained by destructing sample S, removing the resin coating from the base material, and placing only the resin coating on sample stage 2 was analyzed in accordance with the calibration curve method.

Here, the calibration curve method in each of Comparative Examples 1 and 2 is a quantitative analysis method of drawing a calibration curve based on correlation between an intensity of fluorescent X-rays derived from lead in the X-ray spectrum obtained by measuring a standard sample containing a known content of lead and the content of lead. Note that the calibration curve method in each of Comparative Examples 1 and 2 is a known method of drawing the calibration curve based on an intensity ratio between a fluorescent X-ray measurement intensity of lead and continuous scattered X-rays in the vicinity of the fluorescent X-rays of lead, and correcting the influence of a sample shape.

In Comparative Example 1, analysis was performed without separating the base material and the thin film, and thus, the analysis value of lead was lower than that in the case of performing analysis in accordance with another method. A reason for this is that Comparative Example 1 is affected by the film thickness because the film thickness of the thin film cannot be measured in the calibration curve method although shape correction is performed.

In Comparative Example 2, the base material and the thin film were separated and only the thin film was measured, and thus, the film thickness was also corrected as a part of the shape. Therefore, the analysis value was higher in Comparative Example 2 than in Comparative Example 1.

As described above, in the case of the calibration curve method, separating the base material and the thin film and measuring only the thin film can result in the highly accurate analysis result.

The analysis result in Example was close to the analysis result in Comparative Example 2. That is, by using the analysis method according to the present embodiment, the target component in the resin thin film can be accurately measured without destructing sample S.

[Effect Produced by Using Scattering Intensity Ratio]

As shown in Table 1, by using the analysis method according to the present embodiment, the target component in the resin thin film can be measured without destructing sample S. Therefore, the analysis method according to the present embodiment is also applicable to an indestructible sample to be shipped as a product or incorporated into a product after measurement.

In addition, in the analysis method according to the present embodiment, the ratio of the intensity of the Rayleigh scattering to the intensity of the Compton scattering is used. The influence of the shape of sample S on the quantitative value can be corrected by dividing the intensity of the Compton scattering by the intensity of the Rayleigh scattering for standardization.

As a comparative example, when fluorescent X-rays derived from the base material is used for standardization, the fluorescent X-rays cannot be detected and thus cannot be used in a case where the fluorescent X-rays have low transmittance to the thin film. Particularly, when base material B of sample S is mainly composed of a light element having the atomic number of 21 (scandium) or less, fluorescent X-rays of this element have low energy and are difficult to pass through the thin film, and thus, detection by X-ray fluorescence spectrometer 10 is difficult. In contrast, the Rayleigh scattering can be detected regardless of the type of the base material. Therefore, in the method according to the present embodiment, the intensity of the Rayleigh scattering is used for standardization, and thus, sample S having the resin thin film can be analyzed regardless of the base material of sample S, which can make the range of application of analysis by the FP method wider. That is, in the method according to the present embodiment, the sample including the base material mainly composed of the light element having the atomic number of 21 or less can be analyzed.

In addition, in the present embodiment, the ratio of the intensity of the Rayleigh scattering to the intensity of the Compton scattering is used, whereby the bulk resin, which is a bulk of resin, can be used as a standard sample. A reason for this will be described below.

It is known that a measured intensity of scattered X-rays is proportional to a theoretical intensity of the scattered X-rays. A resin material is deeper in entry depth of primary X-rays than a metal material. As illustrated in Fig. 1, scattered X-rays I1 of the primary X-rays incident on the vicinity of the surface of sample S are incident on detector 8 from sample S through opening 4. On the other hand, scattered X-rays I2 of the primary X-rays having penetrated deeply into sample S hit sample stage 2 and do not reach detector 8.

Therefore, when the bulk resin is used as a standard sample, an intensity of scattered X-rays I2 of the primary X-rays having penetrated deeply into sample S cannot be detected, and thus, the proportionality between the measured intensity and the theoretical intensity of the scattered X-rays is broken and a sensitivity coefficient cannot be determined.

Here, since the Compton scattering and the Rayleigh scattering are both scattered X-rays, a part of each of these scattered X-rays cannot be detected. The use of the scattering intensity ratio can counteract the influence of the undetectable scattered X-rays, and thus, even when the bulk resin is used as a standard sample, the sensitivity coefficient ratio can be determined. As a result, the bulk resin can be used as a standard sample.

As described above, by using the analysis method according to the present embodiment, the range of application of analysis by the FP method can be made wider.

In the above-described embodiment, analysis is performed by using the Compton scattering and Rayleigh scattering derived from $RhK\alpha$. However, as long as the sufficient intensities can be obtained, analysis by the FP method can also be performed by using the Compton scattering and Rayleigh scattering derived from $RhK\beta$.

In addition, in the above-described embodiment, control device 14 calculates theoretical intensity $T_C$ of the Compton scattering and theoretical intensity $T_R$ of Rayleigh scattering, and then, calculates estimated scattering intensity ratio $E_{C/R}$. Control device 14 may directly calculate estimated scattering intensity ratio $E_{C/R}$ without calculating theoretical intensity $T_C$ of the Compton scattering and theoretical intensity $T_R$ of the Rayleigh scattering.

[Aspects]

It is understood by those skilled in the art that the embodiment described above is a specific example of the following aspects.

(Clause 1) X-ray fluorescence spectrometry according to an aspect is X-ray fluorescence spectrometry of analyzing secondary X-rays obtained by irradiating a sample with primary X-rays from an X-ray source having a rhodium target. The X-ray fluorescence spectrometry includes: extracting a measured intensity of rhodium-derived Compton scattering from a spectrum of a target sample in which a resin-containing thin film is formed on a base material, the spectrum being created based on the secondary X-rays obtained by irradiating the target sample with the primary X-rays; extracting a measured intensity of rhodium-derived Rayleigh scattering from the spectrum of the target sample; determining a measured scattering intensity ratio based on the measured intensities extracted from the spectrum of the target sample, the measured scattering intensity ratio being a ratio of the measured intensity of the Rayleigh scattering to the measured intensity of the Compton scattering; and determining a thickness of the thin film and contents of elements constituting the target sample by a fundamental parameter method based on the measured scattering intensity ratio of the target sample. A theoretical intensity of the Compton scattering is determined based on a first computing equation including, as variables, the thickness of the thin film and the contents of the elements constituting the target sample. A theoretical intensity of the Rayleigh scattering is determined based on a second computing equation including, as variables, the thickness of the thin film and the contents of the elements constituting the target sample. The determining the thickness of the thin film and the contents includes: determining an estimated scattering intensity ratio from a theoretical scattering intensity ratio by substituting estimated values into the variables included in the first computing equation and the second computing equation, the theoretical scattering intensity ratio being a ratio of the theoretical intensity of the Rayleigh scattering to the theoretical intensity of the Compton scattering; and updating the estimated values such that the estimated scattering intensity ratio converges to the measured scattering intensity ratio.

According to the X-ray fluorescence spectrometry described in Clause 1, the scattering intensity ratio is used, whereby the range of application of analysis by the FP method can be made wider. More specifically, even a sample in which a resin thin film is formed on a base material mainly composed of an element that is difficult to measure fluorescent X-rays can be analyzed by the FP method without destructing the sample. In addition, since the primary X-rays penetrate deeply into the resin component, the scattered X-rays that have penetrated deeply and bounced back cannot be detected in some cases. Even in this case, the use of the scattering intensity ratio can counteract the influence of the undetectable scattered X-rays, and thus, bulk resin can be used as a standard sample. Therefore, even when preparation of the standard sample of the thin film is difficult, analysis by the FP method can be performed.

(Clause 2) In the X-ray fluorescence spectrometry described in Clause 1, the thin film includes at least one inorganic component. A theoretical intensity of fluorescent X-rays derived from the inorganic component is determined based on a third computing equation including, as variables, the thickness of the thin film and a content of the inorganic component. The X-ray fluorescence spectrometry further includes: determining spectral lines generated by the fluorescent X-rays derived from the inorganic component and extracting a measured fluorescent X-ray intensity from the spectrum of the target sample, the measured fluorescent X-ray intensity being a measured intensity of the fluorescent X-rays derived from the inorganic component; and determining a measured fluorescent X-ray intensity ratio based on the measured intensities extracted from the spectrum of the target sample, the measured fluorescent X-ray intensity ratio being a ratio of the measured intensity of the Rayleigh scattering to the measured intensity of the fluorescent X-rays derived from the inorganic component. The determining the thickness of the thin film and the contents further includes determining an estimated fluorescent X-ray intensity ratio from a theoretical fluorescent X-ray intensity ratio by substituting the estimated values into the variables included in the second computing equation and the third computing equation, the theoretical fluorescent X-ray intensity ratio being a ratio of the theoretical intensity of the Rayleigh scattering to the theoretical intensity of the fluorescent X-rays derived from the inorganic component. In the updating the estimated values, the estimated values are updated such that the estimated scattering intensity ratio converges to the measured scattering intensity ratio and the estimated fluorescent X-ray intensity ratio converges to the measured fluorescent X-ray intensity ratio.

According to the X-ray fluorescence spectrometry described in Clause 2, the content of the inorganic component in the thin film resin can be determined.

(Clause 3) In the X-ray fluorescence spectrometry described in Clause 1 or 2, the Rayleigh scattering are Rayleigh scattering derived from $RhK\alpha$. The Compton scattering are Rayleigh scattering derived from $RhK\alpha$.

According to the X-ray fluorescence spectrometry described in Clause 3, analysis is performed by using the scattered X-rays derived from $RhK\alpha$ that is higher in intensity than $RhK\beta$, whereby the accuracy of analysis can be increased.

(Clause 4) In the X-ray fluorescence spectrometry described in any one of Clauses 1 to 3, the base material is mainly composed of an element having the atomic number of 21 or less.

According to the X-ray fluorescence spectrometry described in Clause 4, the FP method can be applied to even a sample in which a resin thin film is formed on a base material mainly composed of an element that is difficult to measure fluorescent X-rays.

(Clause 5) In the X-ray fluorescence spectrometry described in any one of Clauses 1 to 4, the estimated scattering intensity ratio is determined by multiplying the theoretical scattering intensity ratio by a sensitivity coefficient ratio. The X-ray fluorescence spectrometry further includes: extracting a measured intensity of the Compton scattering from a spectrum of a standard sample, the standard sample being bulk resin containing known contents of elements, the spectrum of the standard sample being obtained by irradiating the standard sample with the primary X-rays; extracting a measured intensity of the Rayleigh scattering from the spectrum of the standard sample; determining the measured scattering intensity ratio of the standard sample based on the measured intensities extracted from the spectrum of the standard sample; and determining the sensitivity coefficient ratio from the theoretical scattering intensity ratio of the standard sample and the measured scattering intensity ratio of the standard sample based on the first computing equation and the second computing equation, the theoretical scattering intensity ratio of the standard sample being determined by substituting contents of elements constituting the standard sample and a thickness of the standard sample.

According to the X-ray fluorescence spectrometry described in Clause 5, even when preparation of the standard sample of the thin film is difficult, analysis by the FP method can be performed.

(Clause 6) An analysis program according to an aspect is an analysis program for analyzing secondary X-rays obtained by irradiating a sample with primary X-rays from an X-ray source having a rhodium target. The analysis program causes a computer to perform: extracting a measured intensity of rhodium-derived Compton scattering from a spectrum of a target sample in which a resin-containing thin film is formed on a base material, the spectrum being created based on the secondary X-rays obtained by irradiating the target sample with the primary X-rays; extracting a measured intensity of rhodium-derived Rayleigh scattering from the spectrum of the target sample; determining a measured scattering intensity ratio based on the measured intensities extracted from the spectrum of the target sample, the measured scattering intensity ratio being a ratio of the measured intensity of the Rayleigh scattering to the measured intensity of the Compton scattering; and determining a thickness of the thin film and contents of elements constituting the target sample by a fundamental parameter method based on the measured scattering intensity ratio of the target sample. A theoretical intensity of the Compton scattering is determined based on a first computing equation including, as variables, the thickness of the thin film and the contents of the elements constituting the target sample. A theoretical intensity of the Rayleigh scattering is determined based on a second computing equation including, as variables, the thickness of the thin film and the contents of the elements constituting the target sample. The determining the thickness of the thin film and the contents includes: determining an estimated scattering intensity ratio from a theoretical scattering intensity ratio by substituting estimated values into the variables included in the first computing equation and the second computing equation, the theoretical scattering intensity ratio being a ratio of the theoretical intensity of the Rayleigh scattering to the theoretical intensity of the Compton scattering; and updating the estimated values such that the estimated scattering intensity ratio converges to the measured scattering intensity ratio.

(Clause 7) An X-ray fluorescence spectrometer according to an aspect includes: a sample stage on which a sample is placed; an X-ray tube configured to emit, toward the sample stage, primary X-rays from an X-ray source having a rhodium target; a detector that detects secondary X-rays from the sample placed on the sample stage; and a control device that analyzes the secondary X-rays detected by the detector. The sample is a target sample in which a resin-containing thin film is formed on a base material. A theoretical intensity of rhodium-derived Compton scattering included in the secondary X-rays from the target sample is determined based on a first computing equation including, as variables, a thickness of the thin film and contents of elements constituting the target sample. A theoretical intensity of rhodium-derived Rayleigh scattering included in the secondary X-rays from the target sample is determined based on a second computing equation including, as variables, the thickness of the thin film and the contents of the elements constituting the target sample. The control device is configured to create an X-ray spectrum of the target sample based on the secondary X-rays, extract a measured intensity of the Compton scattering and a measured intensity of the Rayleigh scattering from the created X-ray spectrum, determine a measured scattering intensity ratio based on the extracted measured intensities, the measured scattering intensity ratio being a ratio of the measured intensity of the Rayleigh scattering to the measured intensity of the Compton scattering, and determine the thickness of the thin film and the contents of the elements constituting the target sample by a fundamental parameter method based on the measured scattering intensity ratio of the target sample. The thickness of the thin film and the contents of the elements constituting the target sample are determined by: determining an estimated scattering intensity ratio from a theoretical scattering intensity ratio by substituting estimated values into the variables included in the first computing equation and the second computing equation, the theoretical scattering intensity ratio being a ratio of the theoretical intensity of the Rayleigh scattering to the theoretical intensity of the Compton scattering; and updating the estimated values such that the estimated scattering intensity ratio converges to the measured scattering intensity ratio.

According to the analysis program described in Clause 6 and the X-ray fluorescence spectrometer described in Clause 7, the scattering intensity ratio is used, whereby the range of application of analysis by the FP method can be made wider. More specifically, even a sample in which a resin thin film is formed on a base material mainly composed of an

# EP 4 614 137 A1

element that is difficult to measure fluorescent X-rays can be analyzed by the FP method without destructing the sample. In addition, since the primary X-rays penetrate deeply into the resin component, the scattered X-rays that have penetrated deeply and bounced back cannot be detected in some cases. Even in this case, the use of the scattering intensity ratio can counteract the influence of the undetectable scattered X-rays, and thus, bulk resin can be used as a standard sample. Therefore, even when preparation of the standard sample of the thin film is difficult, analysis by the FP method can be performed.

It should be understood that the embodiment disclosed herein is illustrative and non-restrictive in every respect. The scope of the present invention is defined by the terms of the claims, rather than the description of the embodiment above, and is intended to include any modifications within the scope and meaning equivalent to the terms of the claims.

REFERENCE SIGNS LIST

1 sample chamber; 2 sample stage; 3 housing; 4 opening; 5 measurement chamber; 6 wall surface; 7 X-ray tube; 8 detector; 9 shutter; 10 X-ray fluorescence spectrometer; 11 X-ray filter; 12 drive mechanism; 13 collimator; 14 control device; 15 operation unit; 16 output unit; 20 image pickup unit; 81 X-ray detector; 82 pre-amplifier; 83 proportional amplifier; 106 A/D converter; 107 multichannel analyzer; 111 spectrum storage unit; 112 parameter storage unit; 142 memory; 143 analysis program; 200 data processing unit.

## Claims

1. X-ray fluorescence spectrometry of analyzing secondary X-rays obtained by irradiating a sample with primary X-rays from an X-ray source having a rhodium target, the X-ray fluorescence spectrometry comprising:

   extracting a measured intensity of rhodium-derived Compton scattering from a spectrum of a target sample in which a resin-containing thin film is formed on a base material, the spectrum being created based on the secondary X-rays obtained by irradiating the target sample with the primary X-rays;
   extracting a measured intensity of rhodium-derived Rayleigh scattering from the spectrum of the target sample;
   determining a measured scattering intensity ratio based on the measured intensities extracted from the spectrum of the target sample, the measured scattering intensity ratio being a ratio of the measured intensity of the Rayleigh scattering to the measured intensity of the Compton scattering; and
   determining a thickness of the thin film and contents of elements constituting the target sample by a fundamental parameter method based on the measured scattering intensity ratio of the target sample, wherein
   a theoretical intensity of the Compton scattering is determined based on a first computing equation including, as variables, the thickness of the thin film and the contents of the elements constituting the target sample,
   a theoretical intensity of the Rayleigh scattering is determined based on a second computing equation including, as variables, the thickness of the thin film and the contents of the elements constituting the target sample, and
   the determining the thickness of the thin film and the contents includes:

      determining an estimated scattering intensity ratio from a theoretical scattering intensity ratio by substituting estimated values into the variables included in the first computing equation and the second computing equation, the theoretical scattering intensity ratio being a ratio of the theoretical intensity of the Rayleigh scattering to the theoretical intensity of the Compton scattering; and
      updating the estimated values such that the estimated scattering intensity ratio converges to the measured scattering intensity ratio.

2. The X-ray fluorescence spectrometry according to claim 1, wherein

   the thin film includes at least one inorganic component,
   a theoretical intensity of fluorescent X-rays derived from the inorganic component is determined based on a third computing equation including, as variables, the thickness of the thin film and a content of the inorganic component,
   the X-ray fluorescence spectrometry further comprises:

      determining spectral lines generated by the fluorescent X-rays derived from the inorganic component and extracting a measured fluorescent X-ray intensity from the spectrum of the target sample, the measured fluorescent X-ray intensity being a measured intensity of the fluorescent X-rays derived from the inorganic component; and

14

determining a measured fluorescent X-ray intensity ratio based on the measured intensities extracted from the spectrum of the target sample, the measured fluorescent X-ray intensity ratio being a ratio of the measured intensity of the Rayleigh scattering to the measured intensity of the fluorescent X-rays derived from the inorganic component,

the determining the thickness of the thin film and the contents further includes

determining an estimated fluorescent X-ray intensity ratio from a theoretical fluorescent X-ray intensity ratio by substituting the estimated values into the variables included in the second computing equation and the third computing equation, the theoretical fluorescent X-ray intensity ratio being a ratio of the theoretical intensity of the Rayleigh scattering to the theoretical intensity of the fluorescent X-rays derived from the inorganic component, and

in the updating the estimated values, the estimated values are updated such that the estimated scattering intensity ratio converges to the measured scattering intensity ratio and the estimated fluorescent X-ray intensity ratio converges to the measured fluorescent X-ray intensity ratio.

3. The X-ray fluorescence spectrometry according to claim 1 or 2, wherein

the Rayleigh scattering are Rayleigh scattering derived from RhK$\alpha$, and
the Compton scattering are Rayleigh scattering derived from RhK$\alpha$.

4. The X-ray fluorescence spectrometry according to claim 1 or 2, wherein
the base material is mainly composed of an element having the atomic number of 21 or less.

5. The X-ray fluorescence spectrometry according to claim 1 or 2, wherein

the estimated scattering intensity ratio is determined by multiplying the theoretical scattering intensity ratio by a sensitivity coefficient ratio,
the X-ray fluorescence spectrometry further comprises:

extracting a measured intensity of the Compton scattering from a spectrum of a standard sample, the standard sample being bulk resin containing known contents of elements, the spectrum of the standard sample being obtained by irradiating the standard sample with the primary X-rays;
extracting a measured intensity of the Rayleigh scattering from the spectrum of the standard sample;
determining the measured scattering intensity ratio of the standard sample based on the measured intensities extracted from the spectrum of the standard sample; and
determining the sensitivity coefficient ratio from the theoretical scattering intensity ratio of the standard sample and the measured scattering intensity ratio of the standard sample based on the first computing equation and the second computing equation, the theoretical scattering intensity ratio of the standard sample being determined by substituting contents of elements constituting the standard sample and a thickness of the standard sample.

6. An analysis program for analyzing secondary X-rays obtained by irradiating a sample with primary X-rays from an X-ray source having a rhodium target, the analysis program causing a computer to perform:

extracting a measured intensity of rhodium-derived Compton scattering from a spectrum of a target sample in which a resin-containing thin film is formed on a base material, the spectrum being created based on the secondary X-rays obtained by irradiating the target sample with the primary X-rays;
extracting a measured intensity of rhodium-derived Rayleigh scattering from the spectrum of the target sample;
determining a measured scattering intensity ratio based on the measured intensities extracted from the spectrum of the target sample, the measured scattering intensity ratio being a ratio of the measured intensity of the Rayleigh scattering to the measured intensity of the Compton scattering; and
determining a thickness of the thin film and contents of elements constituting the target sample by a fundamental parameter method based on the measured scattering intensity ratio of the target sample, wherein
a theoretical intensity of the Compton scattering is determined based on a first computing equation including, as variables, the thickness of the thin film and the contents of the elements constituting the target sample,
a theoretical intensity of the Rayleigh scattering is determined based on a second computing equation including, as variables, the thickness of the thin film and the contents of the elements constituting the target sample, and
the determining the thickness of the thin film and the contents includes:

determining an estimated scattering intensity ratio from a theoretical scattering intensity ratio by substituting estimated values into the variables included in the first computing equation and the second computing equation, the theoretical scattering intensity ratio being a ratio of the theoretical intensity of the Rayleigh scattering to the theoretical intensity of the Compton scattering; and
updating the estimated values such that the estimated scattering intensity ratio converges to the measured scattering intensity ratio.

7. An X-ray fluorescence spectrometer comprising:

a sample stage on which a sample is placed;
an X-ray tube configured to emit, toward the sample stage, primary X-rays from an X-ray source having a rhodium target;
a detector that detects secondary X-rays from the sample placed on the sample stage; and
a control device that analyzes the secondary X-rays detected by the detector, wherein
the sample is a target sample in which a resin-containing thin film is formed on a base material,
a theoretical intensity of rhodium-derived Compton scattering included in the secondary X-rays from the target sample is determined based on a first computing equation including, as variables, a thickness of the thin film and contents of elements constituting the target sample,
a theoretical intensity of rhodium-derived Rayleigh scattering included in the secondary X-rays from the target sample is determined based on a second computing equation including, as variables, the thickness of the thin film and the contents of the elements constituting the target sample,
the control device is configured to

create an X-ray spectrum of the target sample based on the secondary X-rays,
extract a measured intensity of the Compton scattering and a measured intensity of the Rayleigh scattering from the created X-ray spectrum,
determine a measured scattering intensity ratio based on the extracted measured intensities, the measured scattering intensity ratio being a ratio of the measured intensity of the Rayleigh scattering to the measured intensity of the Compton scattering, and
determine the thickness of the thin film and the contents of the elements constituting the target sample by a fundamental parameter method based on the measured scattering intensity ratio of the target sample, and

the thickness of the thin film and the contents of the elements constituting the target sample are determined by:

determining an estimated scattering intensity ratio from a theoretical scattering intensity ratio by substituting estimated values into the variables included in the first computing equation and the second computing equation, the theoretical scattering intensity ratio being a ratio of the theoretical intensity of the Rayleigh scattering to the theoretical intensity of the Compton scattering; and
updating the estimated values such that the estimated scattering intensity ratio converges to the measured scattering intensity ratio.

FIG.1

10

1

3

I2

S

2

I1

5

6

12

9 11 13 4

7

20

8

CONTROL
DEVICE

MEMORY 143

ANALYSIS
PROGRAM

CPU

141 142

14

15

OPERATION
UNIT
(KEYBOARD)

OUTPUT UNIT
(DISPLAY
DEVICE)

16

# FIG.2

FIG.3

FIG.4

```
              ┌──────────────┐
              │    START     │
              └──────┬───────┘
                     │  ⌒S1
        ┌────────────▼────────────────┐
        │  ACQUIRE X-RAY SPECTRUM      │
        └────────────┬────────────────┘
                     │  ⌒S2
   ┌─────────────────▼───────────────────┐
   │  EXTRACT MEASURED INTENSITY          │
   │                        ⌒S21          │
   │   ┌──────────────────────────┐       │
   │   │      EXTRACT M_C          │       │
   │   └────────────┬─────────────┘       │
   │                │  ⌒S22               │
   │   ┌────────────▼─────────────┐       │
   │   │      EXTRACT M_R          │       │
   │   └────────────┬─────────────┘       │
   │                │  ⌒S23               │
   │   ┌────────────▼─────────────┐       │
   │   │      EXTRACT M_fi         │       │
   │   └──────────────────────────┘       │
   └──────────────────────────────────────┘
```

$M_C$, $M_R$, $M_{fi}$

CALCULATE $M_{C/R}$ — S3

CALCULATE $M_{fi/R}$ — S4

CALCULATE THEORETICAL INTENSITY — S5

CALCULATE $T_C$ — S51

CALCULATE $T_R$ — S52

CALCULATE $T_{fi}$ — S53

CALCULATE $E_{C/R}$ — S6

CALCULATE $E_{fi/R}$ — S7

$E_{C/R} \rightarrow M_{C/R}$ AND $E_{fi/R} \rightarrow M_{fi/R}$? — S8

NO → CORRECT CONTENT RATE W — S9

CORRECT FILM THICKNESS t — S10

YES → OUTPUT ANALYSIS RESULT — S11

END

FIG.5

```
                    ┌─────────────┐
                    │    START    │
                    └──────┬──────┘
                           │        ⌐S110
              ┌────────────▼─────────────┐
              │ ACQUIRE X-RAY SPECTRUM   │
              │ OF FIRST STANDARD SAMPLE │
              └────────────┬─────────────┘
                           │        ⌐S120
              ┌────────────▼─────────────┐
              │ EXTRACT MEASURED         │
              │ INTENSITY       ⌐S121    │
              │ ┌──────────────────────┐ │
              │ │     EXTRACT M_C      │ │
              │ └──────────┬───────────┘ │
              │            │      ⌐S122   │
              │ ┌──────────▼───────────┐ │
              │ │     EXTRACT M_R      │ │
              │ └──────────────────────┘ │
              └────────────┬─────────────┘
```

$$S110 \quad \text{ACQUIRE X-RAY SPECTRUM OF FIRST STANDARD SAMPLE}$$

$$S120 \quad \text{EXTRACT MEASURED INTENSITY}$$
$$S121 \quad \text{EXTRACT } M_C$$
$$S122 \quad \text{EXTRACT } M_R$$

$$S130 \quad \text{CALCULATE } M_{C/R}$$

$$S140 \quad \text{CALCULATE THEORETICAL INTENSITY}$$
$$S141 \quad \text{CALCULATE } T_C$$
$$S142 \quad \text{CALCULATE } T_R$$

$$S150 \quad \text{CALCULATE } k_{C/R}$$

$$S160 \quad \text{ACQUIRE X-RAY SPECTRUM OF SECOND STANDARD SAMPLE}$$

$$S170 \quad \text{EXTRACT MEASURED INTENSITY}$$
$$S171 \quad \text{EXTRACT } M_{fi}$$
$$S172 \quad \text{EXTRACT } M_R$$

$$S180 \quad \text{CALCULATE } M_{fi/R}$$

$$S190 \quad \text{CALCULATE THEORETICAL INTENSITY}$$
$$S191 \quad \text{CALCULATE } T_{fi}$$
$$S192 \quad \text{CALCULATE } T_R$$

$$S200 \quad \text{CALCULATE } k_{fi/R}$$

$$S210 \quad \text{STORE IN PARAMETER STORAGE UNIT}$$

END

21

## INTERNATIONAL SEARCH REPORT

| | International application No. |
|---|---|
| | **PCT/JP2023/028689** |

**A. CLASSIFICATION OF SUBJECT MATTER**

**G01N 23/223**(2006.01)i
FI: G01N23/223

According to International Patent Classification (IPC) or to both national classification and IPC

**B. FIELDS SEARCHED**

Minimum documentation searched (classification system followed by classification symbols)

G01N23/223

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

JSTPlus/JMEDPlus/JST7580 (JDreamIII)

**C. DOCUMENTS CONSIDERED TO BE RELEVANT**

| Category* | Citation of document, with indication, where appropriate, of the relevant passages | Relevant to claim No. |
|---|---|---|
| A | WO 2015/056305 A1 (SHIMADZU CORP.) 23 April 2015 (2015-04-23) | 1-7 |
| A | JP 2003-107020 A (SHIMADZU CORP.) 09 April 2003 (2003-04-09) | 1-7 |
| A | JP 2017-20924 A (SHIMADZU CORP.) 26 January 2017 (2017-01-26) | 1-7 |
| A | JP 8-247972 A (SHIMADZU CORP.) 27 September 1996 (1996-09-27) | 1-7 |
| A | JP 2010-223908 A (SHIMADZU CORP.) 07 October 2010 (2010-10-07) | 1-7 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **26 September 2023** | **10 October 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

| International application No. |
| --- |
| **PCT/JP2023/028689** |

| Patent document cited in search report | | | Publication date (day/month/year) | Patent family member(s) | Publication date (day/month/year) |
| --- | --- | --- | --- | --- | --- |
| WO | 2015/056305 | A1 | 23 April 2015 | (Family: none) | |
| JP | 2003-107020 | A | 09 April 2003 | (Family: none) | |
| JP | 2017-20924 | A | 26 January 2017 | (Family: none) | |
| JP | 8-247972 | A | 27 September 1996 | (Family: none) | |
| JP | 2010-223908 | A | 07 October 2010 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003107020 A